## Europäisches Patentamt
## European Patent Office
## Office européen des brevets

(19)

(11) Veröffentlichungsnummer: **0 506 722 B1**

(12) **EUROPÄISCHE PATENTSCHRIFT**

(45) Veröffentlichungstag der Patentschrift: **14.09.94**

(51) Int. Cl.⁵: **B06B 1/16**, E02D 7/18

(21) Anmeldenummer: **91900775.7**

(22) Anmeldetag: **19.12.90**

(86) Internationale Anmeldenummer:
**PCT/EP90/02239**

(87) Internationale Veröffentlichungsnummer:
**WO 91/08842 (27.06.91 91/14)**

(54) **VORRICHTUNG ZUR SCHWINGUNGSERREGUNG.**

(30) Priorität: **20.12.89 DE 3942097**
**02.01.90 DE 4000011**
**26.03.90 DE 4009609**

(43) Veröffentlichungstag der Anmeldung:
**07.10.92 Patentblatt 92/41**

(45) Bekanntmachung des Hinweises auf die
Patenterteilung:
**14.09.94 Patentblatt 94/37**

(84) Benannte Vertragsstaaten:
**DE FR GB NL**

(56) Entgegenhaltungen:
EP-A- 0 092 014    WO-A-89/07988
DE-B- 1 072 191    FR-A- 1 566 358
GB-A- 2 059 543    US-A- 3 433 311

(73) Patentinhaber: **GEDIB INGENIEURBÜRO UND
INNOVATIONSBERATUNG GMBH
Schützenstrasse 1
D-57319 Bad Berleburg (DE)**

(72) Erfinder: **BALD, Hubert
Schützenstr. 1
D-5920 Bad Berleburg (DE)**

(74) Vertreter: **Sparing Röhl Henseler Patentanwälte
Postfach 14 04 43
D-40074 Düsseldorf (DE)**

EP 0 506 722 B1

## Beschreibung

Die Erfindung betrifft eine Vorrichtung zur Schwingungserregung eines Vorrichtungsgestells in einer vorgebbaren Richtung.

Vorrichtungen zur Schwingungserregung eines Gestells können so realisiert werden, daß in dem Gestell ein Unwuchtkörper gelagert und zum Umlauf angetrieben wird. Über die Lager des Unwuchtkörpers werden die auf den Unwuchtkörper wirkenden Fliehkräfte auf das Gestell übertragen, das gleich- oder gegenphasig mitschwingt.

Soll die Schwingung in einer einzigen vorgegebenen Richtung erfolgen, ordnet man beidseits einer in dieser Richtung verlaufenden Ebene je einen gleichgroßen Unwuchtkörper an und treibt diese gegenläufig und gleichphasig an, etwa indem man sie über entsprechende Zahnräder kuppelt. Die senkrecht zu der genannten Ebene auftretenden Fliehkräfte kompensieren dann einander, während die in der gewünschten Richtung wirkenden Fliehkräfte einander überlagert sind. Bei einer solchen Anordnung sollen die jeweils beidseits der richtungsbestimmenden Ebene angeordneten Unwuchtkörper als "Gruppe" bezeichnet werden.

Derartige Vorrichtungen mit mehreren Gruppen von Unwuchtkörpern werden auch als "Vibratoren" bezeichnet, die für das Einrammen oder Ziehen von Spundbohlen und dergleichen in den Boden verwendet werden. Vibratoren werden beispielsweise von der Fa. Dr. Ludwig Müller & Söhne KG in D Marburg hergestellt.

Wenn gefordert ist, daß die resultierende Beschleunigung des Vorrichtungsgestells variabel sein soll, wird die Größe des wirksamen Unwuchtmoments verändert. Man unterteilt den Unwuchtkörper in zwei (oder mehr) gleich- oder gegensinnig umlaufende Teil-Unwuchtkörper, wobei hier und im folgenden der Einfachheit halber von zwei Teil-Unwuchtkörper mit jeweils halbem Fliehmoment M/2 ausgegangen wird. Diese beiden Teil-Unwuchtkörper sollen zur Unterscheidung von der oben erwähnten Gruppe als ein "Paar" bildend bezeichnet werden. Wenn die beiden Teil-Unwuchtkörper gegenphasig mit 180° Phasendifferenz umlaufen, kompensieren die auf sie wirkenden Fliehkräfte einander, und an dem Gestell werden keine Schwingungen erzeugt. Laufen sie hingegen gleichphasig um, so addieren sich die auf sie wirkenden Fliehkräfte. Durch Verdrehen der beiden Teil-Unwuchtkörper relativ zueinander kann dann irgendeine gewünschte Phasendifferenz eingestellt werden. Wenn beispielsweise die beiden ein Paar bildenden Teil-Unwuchtkörper durch miteinander kämmende Zahnräder zwangssynchronisiert sind, kann man die Relativverdrehung durch Umstecken der Zahnräder herbeiführen, was natürlich nur im Stillstand möglich ist.

Wird schließlich noch gefordert, daß diese Relativverdrehung der Teil-Unwuchtkörper während ihres Umlaufs möglich sein soll, so ist ein Mechanismus vorzusehen, der dies bewirkt.

Die DE-32 39 266-C2 offenbart einen solchen Mechanismus. Zwei Teil-Unwuchtkörper sind koaxial angeordnet und werden gemeinsam zum Umlauf angetrieben. Die beiden, Teil-Unwuchtkörper können relativ zueinander verdreht werden, indem über einen Keiltrieb die axiale Verlagerung der Kolbenstange eines hydraulischen Arbeitszylinders wirksam wird, die sich dabei auf ihrem Hydraulikfluidpolster abstützt.

Auch bei den oben erwähnten Vibratoren wäre es wünschenswert, eine solche Verstellmöglichkeit vorzusehen, um bei einer gegebenen Antriebsleistung für die Unwuchtkörper die wirksamen Fliehmomente beispielsweise bei zunehmender Umlaufdrehzahl zu verkleinern. Die aus der oben genannten DE-32 39 266-C2 bekannte Vorrichtung, brauchbar bei relativ geringen Drehzahlen und Unwuchten, würde bei Vibratoren mit hohen Drehzahlen und erheblichen Fliehmomenten jedoch praktisch nicht zu realisieren sein. Der Grund ist folgender:

In jeder Relativdrehlage der beiden Teil-Unwuchtkörper -- außer in der Gleich- und in der Gegenphase -- sind der resultierende Gesamt-Fliehkraftvektor und die Einzel-Fliehkraftvektoren der Teil-Unwuchtkörper nicht gleichgerichtet mit dem Ergebnis, daß zwischen beiden ein Reaktionsdrehmoment erzeugt wird, das von den beide verbindenden Bauteilen übertragen wird und um einen von Null abweichenden Mittelwert im Takt der Vibrationsfrequenz pendelt. Das bedeutet, daß erhebliche mechanische Blindleistung zwischen den Teil-Unwuchtkörpern ausgetauscht werden muß, und die diese übertragenden Bauelemente sind entsprechend zu dimensionieren. Jedes Verdrehsystem, das notwendigerweise die entsprechenden Reaktionskräfte abstützen muß, ist ebenfalls entsprechend zu dimensionieren. Man kann nachweisen, daß die auftretenden Reaktionsdrehmomente ein Mehrfaches des Umlaufantriebsmoments beim Umsetzen der maximalen Nutzleistung betragen können.

Aufgabe der Erfindung ist es, eine Vorrichtung zur Schwingungserregung mittels zum Umlauf angetriebener Paare von Teil-Unwuchtkörpern zu schaffen, deren Relativ-Winkellage während des Umlaufs in beherrschbarer Weise verstellbar ist.

Die in den Patentansprüchen 1 und 2 definierte Lösung dieser Aufgabe beruht auf dem Konzept,
- daß die Energie zur Verdrehung zweier Teil-Unwuchtkörper relativ zueinander um einen Stell-Drehwinkel $\beta$ durch Wandlung einer zugeführten hydraulischen oder elektrischen Energie in eine mit einem Verstell-Drehmoment verbundene Drehbewegung eines Motor-Rotors umgesetzt wird, der die Relativdrehung bewirkt, und

- daß eine zur Aufrechterhaltung des Stell-Drehwinkels $\beta$ benötigte Leistung den Stellmotor bzw. den Stellmotoren ständig zugeführt bzw. entnommen werden muß.

Dabei können gemäß Anspruch 1 zwei (oder mehrere) Stellmotoren vorgesehen sein, die mit je einem der Teil-Unwuchtkörper gekuppelt sind, oder ein gemeinsamer Stellmotor, der mit beiden Teil-Unwuchtkörpern gleichzeitig über beispielsweise ein Überlagerungsgetriebe gekuppelt ist.

Im ersteren Falle wird die Blindleistung - gegebenenfalls zusammen mit einer Wirkleistung - vollständig über die Reihenverbindung - also ein elektrisches Kabel oder eine Hydraulikleitung - übertragen, während es im letzteren Falle bevorzugt ist, den größten Teil der Blindleistung über einfachste mechanische Glieder (z.B. Zahnkränze) zu übertragen und nur einen Bruchteil der Leistung im Stellmotor umzusetzen.

Die Unteransprüche definieren weitere bevorzugte Ausgestaltungen des erfindungsgemäßen Konzepts.

Die Druckschrift FR-A-1 566 358 offenbart einen Schwingungsgenerator mit umlaufenden Unwuchtkörpern, wobei der Phasenwinkel mittels eines Stellmotors mit Stator und Rotor, der mit einen Spezialgetriebe gekuppelt ist, verändert werden kann. Dem Motor wird jedoch nur während der Verstellung Leistung zugeführt.

Einen Unwucht-Schwingungsgenerator ohne Verstellmotor mit Stator und Rotor offenbart GB-A-2 059 543; die Scheinleistung wird hier über Zahnräder zwischen den Unwuchtwellen übertragen.

In den Patentansprüchen und bei der Erläuterung der Ausführungsbeispiele werden - soweit es sich um die Beschreibung von Vorgängen und Geräten der Regelungstechnik oder Steuerungstechnik handelt - Begriffe und Benennungen gemäß der DIN-Norm 19 226 (Ausgabe 1968) verwendet.

Soweit im folgenden von Teil-Unwuchtkörpern erster Art bzw. Teil-Unwuchtkörpern zweiter Art die Rede ist, sind damit die ersten bzw. zweiten Teil-Unwuchtkörper aus den Patentansprüchen gemeint. Die Begriffe "erste" und "zweite" dienen nur der Unterscheidung im Rahmen der vorliegenden Erfindung. Diese Teil-Unwuchtkörper brauchen sich technisch/konstruktiv nicht zu unterscheiden.

Ausführungsbeispiele des Gegenstandes der Erfindung werden nachstehend unter Bezugnahme auf die Zeichnungen im einzelnen erläutert.

Fig. 1 zeigt schematisch die mögliche Anordnung zweier Unwuchtkörper-Paare in einem Getriebekasten.

Fig. 2 zeigt schematisch eine andere Anordnung zweier Unwuchtkörper-Paare mit einem gemeinsamen Stellantrieb mit Kennzeichnung einer Schnittführung für die Darstellung in Fig. 2 b.

Fig. 2b ist eine Schnittdarstellung durch einen Getriebekasten mit einer erfindungsgemäßen Vorrichtung mit einer Schnittführung gemäß der Linie C-D in Fig. 2a.

Fig. 3 zeigt den Schnitt durch einen Getriebekasten, ähnlich wie in Fig. 2b, jedoch mit einer andersartigen Variante einer Vorrichtung nach der Erfindung.

Fig. 4 ist die schematische Darstellung einer bekannten Vorrichtung zur Schwingungserregung mit verstellbarem resultierenden Fliehmoment zwecks Erläuterung von theoretischen Grundlagen.

Fig. 5a bis 5e zeigt die schematische Darstellung der Fig. 4 in erweiterter Form in unterschiedlichen Rotations-Phasen.

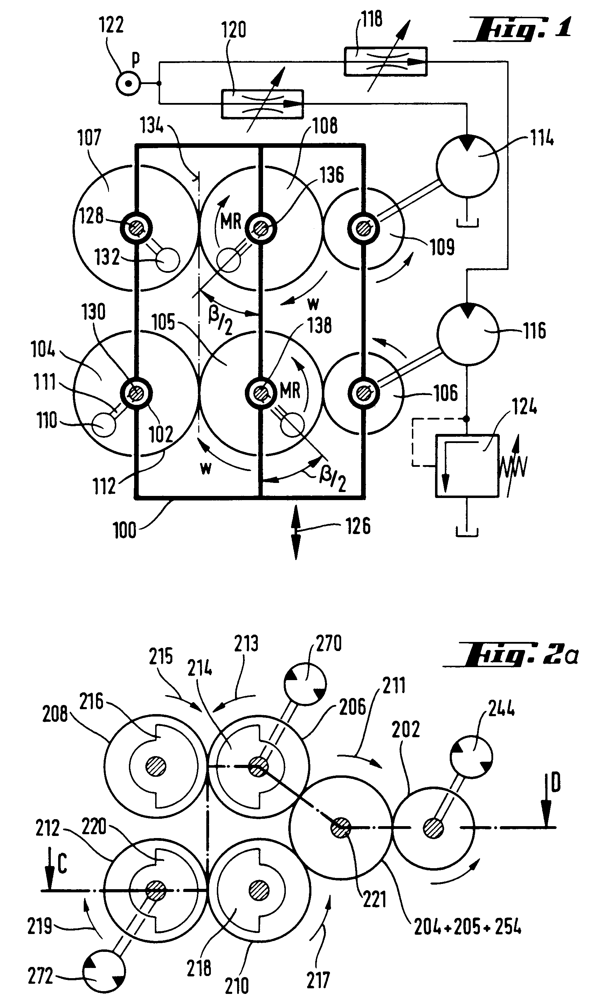

Fig. 1 zeigt schematisch eine Vorrichtung zur Schwingungserregung mit zwei Paaren von relativ zueinander verstellbaren Teil-Unwuchtkörpern mit einem Antriebssystem mit gemeinsamen Komponenten für Stellantrieb und Arbeitsantrieb. Ein mit Masse behaftetes Vorrichtungsgestell 100 weist Lagerstellen 102 auf zur Lagerung der drehbaren Körper 104 bis 109 und ist dank der gewählten Anordnung imstande, zusammen mit den drehbaren Körpern Schwingungen in Richtung des Doppelpfeiles 126 auszuführen.

Die Kreise 110 an den Armen 111 symbolisieren die Teil-Fliehmomente M/2 mit ihrer Winkellage mit dem Relativ-Stellwinkel $\beta$, und die Kreise 112 deuten die Zwangssynchronisierung der zugehörigen Teil-Unwuchtkörper durch Zahnräder an. Die Teil-Unwuchtkörper 107 und 108 bzw. 104 und 105 sind zwei Unwuchtkörper erster Art bzw. zweiter Art. Die Teil-Unwuchtkörper 104 und 107 bzw. 105 und 108 bilden jeweils ein zusammengehöriges Unwuchtkörper-Paar, deren Teil-Fliehmomente je nach Größe des eingenommenen Relativ-Stellwinkels $\beta$ ein unterschiedliches, resultierendes Fliehmoment (= M bei $\beta$ = 0° und = Null bei $\beta$ = 180°) erzeugen.

Über die Zahnräder 109 bzw. 106 sind die Unwuchtkörper erster Art bzw. zweiter Art getrennt von je einem Hydraulikmotor 114 bzw. 116 angetrieben. Beide Hydraulikmotoren werden von einer gemeinsamen Druckquelle 122 gespeist und über geeignete Regelorgane 118, 120 durch Erzeugung eines gleichgroßen Mengenflusses zum Synchronlauf gezwungen, womit auch die Unwuchtkörper erster und zweiter Art in der mit w gekennzeichneten Richtung synchron umlaufen.

Mit einem einstellbaren Druckbegrenzungsventil 124 kann das durch den Hydraulikmotor 116 nutzbare Druckgefälle verändert werden. Bei einem für beide Hydraulikmotoren gleichen Schluckvolumen kann durch diese Maßnahme erreicht werden, daß das vom Hydraulikmotor 116 abgebbare Drehmoment kleiner ist als das des anderen Motors, womit eine Veränderung des Relativ-Stellwinkels $\beta$ erreicht werden kann.

Die hier gezeigte Lösung zur Erzeugung einer Verstellbewegung ist jedoch nicht vorteilhaft, und die Figur 1 dient daher in erster Linie zur Veranschaulichung der Begriffe und der Funktionsproblematik einer Gattung von Vorrichtungen, auf die sich die vorliegende Erfindung bezieht. Hinzuweisen ist noch auf den in Fig. 1 dargestellten Sachverhalt, daß die gerichteten Teil-Fliehmomente M/2 beider Unwuchtkörper-Paare 104/107 bzw. 105/108 stets spiegelbildlich angeordnet sein müssen bezüglich einer Ebene 134, die mittig zwischen den Drehachsen 128, 130 bzw. 136, 138 liegt.

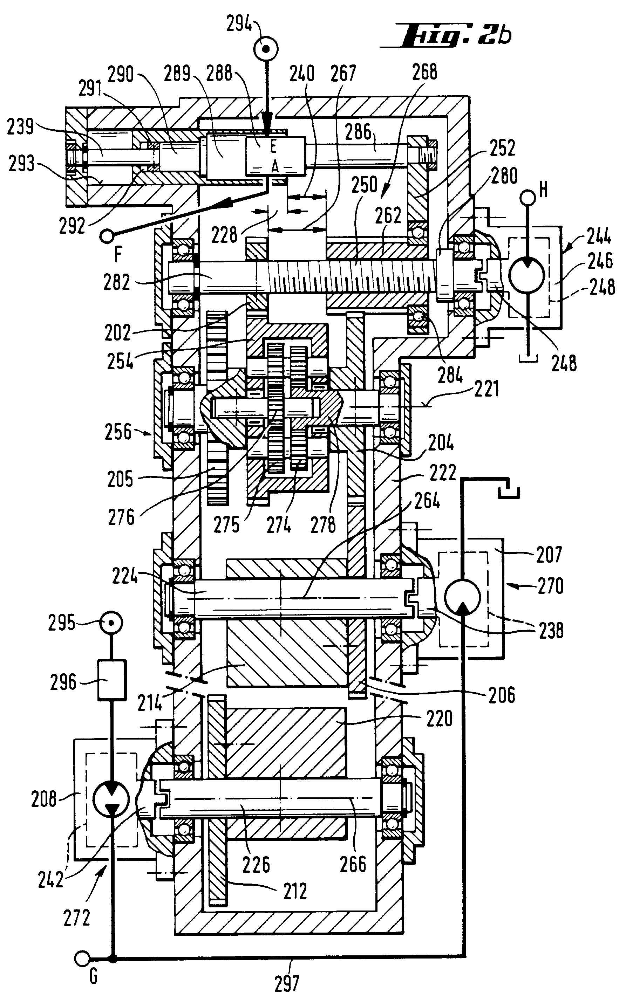

In Fig. 2a ist das Getriebe-Schema der Haupt-Getriebeteile des Getriebekastens nach Fig. 2b wiedergegeben. Es sind, ähnlich wie in Fig. 1, vier Teil-Unwuchtkörper vorgesehen, von denen je zwei, 214 und 218 bzw. 216 und 220, zu einem Unwuchtkörper-Paar gehören und mit ihren Teil-Fliehmomenten ein variables resultierendes Fliehmoment bilden können. Der Relativ-Stellwinkel $\beta$ ist im gezeichneten Beispiel (gemäß der Definition nach Fig. 1) $\beta = 0°$.

Die Unwuchtkörper erster Art 214, 216 und die Unwuchtkörper zweiter Art 218, 220 sind jeweils durch Zahnräder 206/208 bzw. 210/212 entsprechend den Drehrichtungspfeilen 214 bzw. 216 zum gegenläufigen Synchronlauf gezwungen. Wie durch die Drehrichtungspfeile 217 bzw. 219 zum Ausdruck gebracht wird, laufen die Unwuchtkörper je eines Unwuchtkörper-Paares jedoch gleichsinnig um.

Die Zahnräder 206/208 bzw. 210/212 liegen in unterschiedlichen Ebenen. Um die Drehachse 221 laufen in unterschiedlichen Ebenen zwei Zahnräder 204 und 205 um, wobei Zahnrad 204 mit Zahnrad 206 und Zahnrad 205 mit Zahnrad 210 im Eingriff steht. Zwischen den beiden Zahnrädern 204 und 205 ist ein (nur in Fig. 2b erkennbares) Überlagerungsgetriebe angeordnet, mit Hilfe dessen die beiden Zahnräder 204 und 205 gegeneinander verdreht werden können und dessen Überlagerungs-Eingang zur Einführung einer Überlagerungsbewegung bzw. einer Überlagerungsenergie als ein Zahnrad 254 (mit gleichem Teilkreis wie Zahnräder 204 und 205) ausgebildet ist, welches zur Einspeisung der Überlagerungsbewegung mit einem Zahnrad 202 in Eingriff steht.

Das Zahnrad 202 erhält seinen Bewegungsantrieb von einem hydraulischen Stellmotor 244. Beide Unwuchtkörper-Paare sind getrennt von zwei hydraulischen Antriebsmotoren 270, 272 angetrieben, deren Motor-Rotoren drehfest mit den Zahnrädern 206 bzw. 212 verbunden sind.

Figur 2b zeigt im Schnitt einen Getriebekasten 222, dessen Haupt-Getriebeteile bereits in dem Getriebeschema der Fig. 2a aufgezeigt sind und die Schnittführung durch den Getriebekasten 222 folgt der Schnitt-Linie C-D in Fig. 2a. Bei der näheren Erläuterung der Anordnung nach Fig. 2b wird auf die bereits mit Fig. 2a beschriebenen Funktionen derjenigen Bauteile hingewiesen, welche in beiden Figuren mit gleichen Kennziffern ausgewiesen sind. Im Interesse einer vereinfachten Darstellung wurden einige Komponenten und Funktionen schematisch und unter Verwendung von allgemein bekannten Sinnbildern der Fluidik dargestellt; Verbindungselemente, wie Schrauben, Stifte, usw. wurden durch Strich-Punkt-Linien angedeutet.

Die zu zwei unterschiedlichen Unwuchtkörper-Paaren zugehörigen Teil-Unwuchtkörper 214, 220 sind drehfest mit in Wälzlagern gelagerten Wellen 224, 226 verbunden. Zur Übertragung von Arbeitsleistung auf die Unwuchtkörper erster und zweiter Art sind hydraulische Arbeitsantriebs-Motoren 270 bzw. 272 mit Statoren 207 bzw. 208 und mit Rotoren 238 bzw. 242 vorgesehen, wobei die Rotoren drehfest mit den Wellen 224 bzw. 226 gekuppelt sind.

Ein aus mehreren Elementen bestehendes und als Ganzes - in Wälzlagern im Gehäuse gelagert - mitumlaufendes Stellgetriebe 256 für die Verstellung der Teil-Unwuchtkörper gegeneinander um einen Relativ-Stellwinkel ist als Überlagerungsgetriebe gebaut. Die Zuführung der Überlagerungsbewegung bzw. Stellbewegung erfolgt über das mit einem Zahnkranz versehene Planetengehäuse 254, wobei der Zahnkranz als Überlagerungseingang bezeichnet werden kann.

Über das Zahnrad 204, welches auch als der Synchronisierungseingang des Überlagerungsgetriebes betrachtet werden kann, ist das Überlagerungsgetriebe 256 mit den Unwuchtkörpern erster Art 214, 216 (Fig. 2a) und über das Zahnrad 205, welches als der Summierausgang angesehen werden kann, ist das Überlagerungsgetriebe mit den Unwuchtkörpern zweiter Art 218 (Fig. 2a), 220 drehmomentübertragend verbunden.

Die Winkelverstellung der Zahnräder 204 und 205 relativ zueinander wird durch eine Relativdrehung des Planetengehäuses 254 relativ zum Zahnrad 204 bewirkt, unter Beteiligung der Planetenräder 274, 275 und der Sonnenräder 276, 278 mit großer Untersetzungs-Wirkung. Die Relativdrehung des Planetengehäuses 254 kann erzeugt werden durch eine entsprechende Drehbewegung des Zahnrades 202, welches drehfest auf der in zwei Wälzlagern gelagerten Welle 282 befestigt ist. Mit der Welle 282 ist der Rotor 248 des hydraulischen Stellmotors 244 (mit Stator 246) drehmomentübertragend gekuppelt.

Auf dem Gewindeteil 250 der Welle 282 sitzt ein mit entsprechendem Innengewinde (nicht dargestellt) versehenes Zahnrad 262 mit größerer Axialerstrekkung, welches zusammen mit dem Gewindeteil 250 ein Schraubgetriebe bildet. Mit seiner Außenverzahnung mit dem gleichen Teilkreis, wie ihn Zahnrad 202 aufweist, steht das Zahnrad 262 im Eingriff mit Zahnrad 204.

Zahnrad 202 bildet zusammen mit Gewindeteil 250 und Zahnrad 262 ein Meßgetriebe 268, welches wie folgt funktioniert: Für den Fall, daß der zwischen den Unwuchtkörpern erster und zweiter Art einstellbare Relativ-Stellwinkel ($\beta$ in Fig. 1) konstant bleibt, laufen die Zahnräder 204, 205 und das Planetengehäuse 254 (alle drei mit gleichem Teilkreisdurchmesser versehen) synchron, d.h. ohne eine Relativbewegung zueinander, um ihre gemeinsame Drehachse 221 um. Demzufolge findet auch zwischen Zahnrad 202 und Zahnrad 262 keine Relativbewegung statt. Bei einer Veränderung des Relativ-Stellwinkels erfolgt eine Verdrehung des Planetengehäuses 254 relativ zum Zahnrad 204, mithin auch eine Verdrehung des Zahnrades 202 relativ zum Zahnrad 262, was eine entsprechende Axialverlagerung des Zahnrades 262 relativ zum Zahnrad 202 zur Folge hat.

Die Axialverlagerung des Zahnrades 262 kann über ein Wälzlager 284 abgegriffen und auf stationäre Teile übertragen werden.

Nachfolgend soll die Funktion des Meßgetriebes im Zusammenhang mit der Bildung eines Regelkreises gesehen werden. Wie anschließend noch näher zu erläutern ist, soll die von einem Stellmotor oder auch von den Antriebsmotoren abgeleitete Verstell-Drehbewegung für die Verstellung des Relativ-Stellwinkels dem Einfluß eines Regelkreises unterworfen werden, womit letztlich der Relativ-Stellwinkel $\beta$ selbst als Regelgröße (siehe auch DIN 19226, Ausgabe Mai 1968) geregelt werden soll.

Für den zu bildenden Regelkreis ist die abgreifbare Axialverschiebung 267 des Zahnrades 262 ein analoges Abbild der Regelgröße. Das Meßgetriebe 268 wandelt die als physikalische Größe "Winkel" vorliegende Regelgröße ($\beta$) in die physikalische Größe "Weg" um und wirkt daher als ein Signalwandler. Das über das Wälzlager 284 abgreifbare Regelgrößen-Signal wird über einen Hebel 252 und eine Stange 286 einem Wandlerelement 1 288 mitgeteilt, welches mit einem Wandlerelement 2 289 korrespondiert. Im Sinne der Weiterverarbeitung des Regelgrößensignals könnten die Wandlerelemente 1 und 2 mehrfache Funktionen erfüllen:

- Die durch die Wandlerelemente wahrgenommene Funktion könnte darin bestehen, das in der physikalischen Größe Weg vorliegende Signal in ein analoges elektrisches Signal oder in ein hydraulisches Drucksignal zu wandeln, welches am Punkt F abnehmbar wäre,

- die durch die Wandlerelemente wahrgenommene Funktion könnte z.B. auch in der Durchführung der Funktion der Regeleinrichtung des Regelkreises bestehen, wobei am Punkt F ein Stellsignal für die Beeinflussung der Regelstrecke zur Verfügung stünde.

Für die Wahrnehmung der Funktion einer Regeleinrichtung wird die Zuführung des Signals Führungsgröße erforderlich. Die Führungsgröße wird dem Wandlerelement 2 289 als physikalische Größe Weg zugeführt, dadurch, daß das ganze Wandlerelement in der Aufnahmebohrung 293 axialverschieblich angeordnet ist, und daß ihm die Führungsgröße als Wegverschiebung mitgeteilt wird. Hierfür ist im Inneren des Wandlerelementes 2 ein Stufenkolben 239/291 vorgesehen, welcher sich außerhalb gegen das Gehäuse abstützt. Zwei hydraulische Druckkammern 290, 292 arbeiten mit dem Stufenkolben zusammen. Je nach Beaufschlagung der Druckkammern (auf nicht dargestellte Weise) mit hydraulischem Druck wird das Wandlerelement 2 289 in der einen oder anderen Richtung verschoben. Die Wegverschiebung 228 stellt dann das in der physikalischen Größe Weg vorliegende Signal für die Führungsgröße und damit den Soll-Wert für den Relativ-Stellwinkel dar. Mit der Weggröße 240 ist die Regelabweichung erfaßbar.

Für die nachfolgenden Betrachtungen soll die Funktion der Wandlerelemente 1 und 2 288, 289 vorzugsweise darin bestehen, daß sie die Regeleinrichtung und das Stellglied eines hydraulisch betriebenen Regelkreises zugleich darstellen. In dieser Funktion erzeugen sie einen von der Fluiddruck-Quelle 294 abgeleiteten und am Punkt F entnehmbaren hydraulischen Volumenstrom mit der notwendigen Stellenergie zur Umsetzung in eine Stellbewegung über die hydraulischen Motoren.

Mit den in der Figur 2b dargestellten Elementen und Funktionen kann die erfindungsgemäße Vorrichtung zur Schwingungserregung in 3 unterschiedlichen Versionen betrieben werden:

**Betriebsversion 1**

Die in Reihe geschalteten Arbeits-Antriebsmotoren 272 und 270 werden von einem Druckfluid-Volumenstrom durchströmt und zu beliebigen Arbeitsdrehzahlen angetrieben. Der Druckfluid-Volumenstrom wird einer Druckquelle 295 entnommen und durch ein hydraulisches Steuergerät 296 beeinflußt.

Am Zahnrad 262 sei das Wälzlager 284 mit Hebel 252 entfernt, da die Funktion des daran angeschlossenen Wandlerelementes 1 288 bei Version 1 nicht benötigt wird. Das Meßgetriebe 268 ist im Falle der Version 1 zu einem Stellwinkel-Begrenzer umfunktioniert, derart, daß bei einem Rela-

tiv-Stellwinkel $\beta$ = 0° das Zahnrad 262 mit seiner möglichen Axialverschiebung am Bund 280 und bei einem Relativ-Stellwinkel $\beta$ = 180° am Zahnrad 202 einen Anschlag gefunden hat.

Der hydraulische Stellmotor 244 ist am Anschlußpunkt H über ein Steuergerät an eine Druckquelle (beide nicht dargestellt) angeschlossen und über das Steuergerät derart ansteuerbar, daß der Relativ-Stellwinkel $\beta$ bei beliebigen Drehzahlen der Unwuchtkörper durch Anfahren und Einhalten der beiden Anschlagstellungen des Zahnrades 262 beliebig in eine der beiden Endstellungen eingestellt werden kann.

Es ist dies das besondere Kennzeichen der Betriebsweise nach Version 1, die Vorrichtung lediglich mit zwei Betriebsstellungen des Relativ-Stellwinkels $\beta$ betreiben zu wollen.

In der Betriebsstellung $\beta$ = 180° wird der Stellmotor 244 am besten mit einem kleinen negativen Drehmoment (als Generator) betrieben. In der Betriebsstellung $\beta$ = 0° wird der Stellmotor mit einem Drehmoment betrieben, welches größer ist als das maximal zur Überwindung der größten, zu erwartenden Reaktionsdrehmomente benötigte Drehmoment, um eine sichere Anschlagslage zu gewährleisten. Die dem in der Anschlagslage $\beta$ = 0° vom Zahnrad 262 und Zahnrad 202 gemeinsam übertragenen Drehmoment entsprechende Leistung des Stellmotors 244 geht nicht etwa verloren, sondern wird als Arbeitsleistung durch die Unwuchtkörper umgesetzt.

## Betriebsversion 2

In der Betriebsversion 2 soll der Relativ-Stellwinkel $\beta$ bei beliebigen Drehzahlen durch Einbeziehung des hydraulischen Stellmotors 244 in die Regelstrecke eines Regelkreises auf beliebige Werte zwischen 0° und 180° einstellbar sein. Für den Antrieb der Arbeitsantriebsmotoren 270, 272 gilt das gleiche wie für Version 1 beschrieben. Das Meßgetriebe 268 arbeitet wie gezeichnet mit den Wandlerelementen 1 288 und 2 289 zusammen, welche in diesem Falle die Funktion der Regeleinrichtung und des Stellgliedes zugleich erfüllen sollen, so daß an Punkt F ein Druckfluid-Volumenstrom abgenommen werden kann, der durch eine (nicht gezeichnete) Leitung zum Anschlußpunkt H des Stellmotors 244 weitergeleitet, von diesem in die notwendige Stelldrehbewegung umgesetzt wird.

Die Vorgabe des Soll-Wertes für den Winkel $\beta$ geschieht über die (hydraulisch bewirkte) Axialverstellung des Wandlerelementes 2 289. Der Stellmotor 244 könnte - entgegen der zeichnerischen Darstellung - durch die Regeleinrichtung natürlich auch im 4-Quadranten-Betrieb betrieben sein.

Die zwischen den Unwuchtkörpern erster und zweiter Art bei ihrer Drehung mit der Winkelgeschwindigkeit w und gleichzeitiger Schwingungserregung des Getriebekastens 222 (in einer zur Zeichenebene senkrechten Schwingungsrichtung) aktiv werdenden Reaktionsdrehmomente MR entsprechen einer Leistung MR x w, die als Blindleistung von den Unwuchtkörpern der einen Art auf die Unwuchtkörper der anderen Art unter Benutzung eines über die Zahnräder 204, 205 und über das Überlagerungsgetriebe 256 geführten Transportweges geleitet wird.

In Anbetracht der enormen Größe dieser Blindleistungen, die mehrfach größer sein können als die von den Arbeits-Antriebsmotoren maximal aufzubringende Leistung, wird erkennbar, wie günstig - auch im Hinblick auf die Übertragungsverluste - ihre Umleitung durch ein Überlagerungsgetriebe vollzogen wird.

## Betriebsversion 3

In der Betriebsversion 3 soll der Relativ-Stellwinkel $\beta$ bei beliebigen Drehzahlen durch Einbeziehung der Arbeits-Antriebsmotoren 270, 272 in die Regelstrecke eines Regelkreises auf beliebige Werte zwischen 0° und 180° einstellbar sein. In diesem Falle wird der besondere Stellmotor 244 nicht benötigt und man könnte sich ihn als entfernt vorstellen.

Auch das Überlagerungsgetriebe wird bei der Betriebsversion 3 nicht benötigt, da die Arbeits-Antriebsmotoren diese Funktion mit übernehmen sollen. Aus diesem Grunde wird der Einfachheit halber angenommen, daß für die hier zu beschreibende Betriebsversion das Planetengetriebe des Überlagerungsgetriebes blockiert ist, während gleichzeitig Zahnrad 204 frei verdrehbar relativ zum Sonnenrad 278 sein soll. In der Betriebsversion 3 sollen die Zahnräder 204 und 205 auch keine Blindleistung mehr übertragen, sondern sie sollen mit ihrer Drehwinkel-Lage lediglich die Verstellung des Relativ-Stellwinkels $\beta$ zum Meßgetriebe 268 weiterleiten. Das Meßgetriebe 268 soll seiner Bestimmung gemäß wie bei Version 2 arbeiten.

Die in Serie geschalteten Arbeits-Antriebsmotoren 270, 272 werden durch einen der Druckquelle 295 entnommenen Druckfluid-Volumenstrom angetrieben und mittels eines hydraulischen Steuergliedes 296 bezüglich ihrer Arbeitsdrehzahl gesteuert.

Die durch die Wandlerelemente 1 und 2, 288 und 289 symbolisierte Regeleinrichtung mit angeschlossenem Stellglied stellt in diesem Falle am Ausgang F einen für die Regelung des Winkels $\beta$ angepaßten Druckfluid-Volumenstrom zur Verfügung, welcher, über eine (nicht gezeichnete) Leitung zum Anschlußpunkt G weitergeleitet, zwischen den beiden Hydraulikmotoren 270 und 272 eingespeist wird.

Es wird vorausgesetzt, daß der von der Druckquelle 294 abgeleitete Steuer-Volumenstrom unter einem hydraulischen Druck steht, der stets größer ist als der zwischen Hydraulikmotoren 270, 272 herrschende Druck. Als Folge des eingespeisten Steuer-Volumenstromes stellt sich zwischen den Rotoren 238 und 242 der Hydraulikmotoren und folglich auch zwischen den Unwuchtkörpern erster und zweiter Art ein veränderter Relativ-Stellwinkel ein, dessen absolute Größe durch die Führungsgröße 228 vorgegeben werden kann.

In dem hier geschilderten Falle arbeiten die Arbeits-Antriebsmotoren 270 und 272 also zugleich auch als Stellmotoren. Die Blindleistung wird über die Leitung 297 von den Unwuchtkörpern der einen Art zu den Unwuchtkörpern der anderen Art übertragen und erfordert selbstverständlich ein beträchtlich vergrößertes Leistungsübertragungsvermögen der beteiligten hydraulischen Komponenten.

Ein Zahlenbeispiel soll die Übertragung der Blindleistung durch die Hydraulikmotoren besser veranschaulichen:

Es wird angenommen, daß bei einer bestimmten Winkelgeschwindigkeit w der Unwuchtkörper die Übertragung der mechanischen Blindleistung Pb = MR x w durch einen Druckfluidvolumenstrom Q mit einem zugehörigen Druck pb = 120 bar, also mit der hydraulischen Leistung Pb = Q x pb erfolgen soll. Die mechanische Blindleistung wird am Hydraulikmotor 272 zunächst in die hydraulische Blindleistung umgesetzt, wobei der Motor 272 als Pumpe wirkt, und danach am Hydraulikmotor 270 erneut in eine mechanische Leistung Pb = MR x w umgewandelt.

Als Arbeitsleistung soll eine hydraulische Leistung von Q x pa mit pa = 50 bar zu gleichen Teilen auf beide Motoren verteilt werden, was an jedem Motor einen entsprechenden Druckabfall von 25 bar bewirkt.

Für die Arbeitsleistung liefert die Druckquelle 295 einen Druckfluidvolumenstrom Q mit einem Druck von 50 bar, von welchem 25 bar zunächst am Motor 272 aufgezehrt werden. Durch den gleichzeitigen Betrieb des Motors 272 als Pumpe für die hydraulische Blindleistung wird der Volumenstrom Q auf der Pumpenseite des Motors 272 von dem Druckniveau 25 bar um 120 bar auf das Druckniveau 145 bar angehoben, so daß in diesem Falle die Druckquelle 294 über einen Ausgangsdruck von wenigstens pb + pa/2 = 145 bar verfügen muß.

Am Motor 270 wird eine Gesamtleistung von Q x (pb + pa/2) umgesetzt, entsprechend einem Anteil Q x pb für die Blindleistung und Q x pa/2 für die Arbeitsleistung. Bei einer Änderung der von der Schwingungserreger-Vorrichtung nach außen abzugebenden Arbeitsleistung bei gleichbleibender Winkelgeschwindigkeit w ist im wesentlichen lediglich eine Änderung des Druckes pa erforderlich, womit sich der am Anschlußpunkt G aufrechtzuerhaltende Druck gemäß der zuvor aufgezeigten Beziehung ebenfalls ändern muß.

In Abänderung der in Fig. 2b für die Betriebsversion 3 vorgesehenen hydraulischen Schaltung könnte auch ein die Druckquelle 295 mit einbeziehender geschlossener Druckfluid-Kreislauf vorgesehen werden oder es könnten die Hydraulikmotoren auch voneinander getrennt durch zwei unterschiedliche Druckquellen versorgt werden, wenn lediglich Vorsorge dafür getroffen wird, daß zwischen dem Ausgang von Motor 272 und dem Eingang von Motor 270 der erforderliche Differenzdruck (im Beispiel 120 bar) für die Blindleistung vorhanden ist.

Eine Abhilfe bezüglich des für die Übertragung der hydraulischen Blindleistung zu vergrößernden Leistungsübertragungsvermögens kann dadurch geschaffen werden, daß die Regeleinrichtung oder eine einfachere Steuereinrichtung, wie später beschrieben, nur immer dann aktiviert wird, wenn es gilt, den Relativ-Stellwinkel auf einen anderen Wert einzustellen. In einem solchen Falle könnte z.B. anstelle des im Überlagerungsgetriebe 256 untergebrachten Planetengetriebes dort zwischen den Zahnrädern 204 und 205 eine schaltbare Kupplung angeordnet sein, welche in dem einen Schaltzustand eine Relativverdrehung der Zahnräder 204 und 205 zuläßt und in dem anderen Schaltzustand nicht. Alternativ könnte auch an anderer Stelle eine andersartig gestaltete, sich jedenfalls aber dem zu ändernden Relativ-Stellwinkel $\beta$ anpassende Kupplung vorgesehen sein.

Nur während einer Verstellung des Relativ-Stellwinkels $\beta$ wäre dann der Momentenfluß durch die Kupplung aufzuheben. Beim Arbeiten mit konstantem Winkel $\beta$ wäre die Kupplung geschlossen und die Blindleistung würde anstatt über den hydraulischen Weg über den günstigeren mechanischen Weg geleitet.

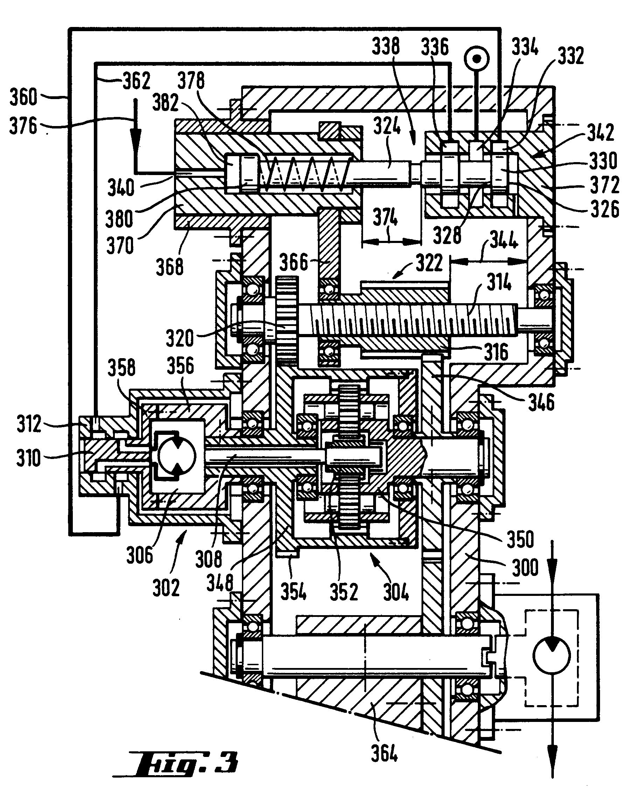

In Fig. 3 wird eine Schwingungserregervorrichtung gezeigt, welche ähnlich arbeitet wie diejenige nach Fig. 2b, mit der Betriebsversion 2 betriebene. Der Einfachheit halber wird daher nur derjenige Teil der Vorrichtung zeichnerisch wiedergegeben, welcher von der Abänderung betroffen ist.

Es ist ein Überlagerungsgetriebe 304 vorgesehen, dessen Synchronisiereingang ein mit dem Planetensteg 350 drehfest verbundenes Zahnrad 346 und dessen Summierausgang das mit einem Zahnkranz 354 versehene Planetengehäuse 348 ist. Als Überlagerungseingang dient ein Sonnenrad 352, welches von dem Rotor eines auch mit dem Stator 306 mitumlaufenden Stellmotors 302 angetrieben wird.

Der Stator 306 ist mit dem Planetengehäuse 348 über eine Buchse 356 verbunden und wird mit einem Deckel 358 festgespannt. Ein am Deckel angebrachter zylindrischer Fortsatz bildet die mit Ölkanälen durchsetzte Welle 310 einer Drehdurchführung bekannter Bauart mit zwei Kanälen. Der topfförmig ausgebildete stationäre Teil 312 der Drehdurchführung enthält zwei Anschlußöffnungen, welche über hydraulische Leitungen 360, 362 mit der Regeleinrichtung 338 verbunden sind.

Der in diesem Falle komplett mitumlaufende hydraulische Stellmotor 302 bewirkt - je nach Druckbeaufschlagung in den Leitungen 360, 362 - über das Überlagerungsgetriebe eine Verstellung des Relativ-Stellwinkels $\beta$ an den Unwuchtkörpern.

Das Meßgetriebe 322 arbeitet ähnlich wie dasjenige in Fig. 2b und die Regelgröße 344 wird über einen Hebel 366 an einen in der Bohrung eines Buchsenflansches 368 axialverschieblich untergebrachten Zylinder 370 als Verstellweg weitergegeben. Dieser Verstellweg wird von einem Steuerkolben 324 aufgenommen, welcher mit seinen Steuerkanten 326, 328 mit in dem Steuerzylinder 372 eingebrachten Steuerschlitzen 332, 334, 336 in bekannter Weise eine Volumenstromsteuerung zur Bewegungssteuerung des Stellmotors 302 in zwei Richtungen vornimmt.

Bei der Durchführung dieser Funktion fungieren die beiden Elemente Steuerkolben und Steuerzylinder zugleich als Soll-Ist-Wert-Vergleicher und als Stellglied.

Zur Veränderung des vorzugebenden Soll-Wertes des Relativ-Stellwinkels $\beta$ wird dem dem Signal Regelgröße entsprechenden Weg 344 am Steuerkolben 324 selbst noch ein dem Signal Führungsgröße entsprechender Weg 374 überlagert. Das Signal Führungsgröße in der physikalischen Form eines Weges 374 wird von einem Signal Führungsgröße in der physikalischen Form eines Drucks 376 abgeleitet, da sich ein Drucksignal bei den beim praktischen Betrieb einer erfindungsgemäßen Vorrichtung vorherrschenden Betriebsbedingungen sehr voteilhaft erzeugen und weiterleiten läßt.

Die Umformung des Drucksignals 376 in das Wegsignal 374 geschieht durch eine Druck-Federweg-Wandlung im Zylinder 370. Ein am Steuerkolben 324 an seinem linken Ende angebrachter Kolben-Ansatz 380 wird auf der rechten Seite durch eine Feder beaufschlagt, welche den Steuerkolben nach links gegen einen Endanschlag - entsprechend dem Soll-Wert $\beta$ = 0 zu drücken bemüht ist. Auf seiner linken Seite ist der Kolben-Ansatz 380 mit dem hydraulischen Druck des Drucksignals 376 beaufschlagt, welcher eine Verschiebung des Steuerkolbens 324 nach rechts um einen der Höhe des Druckes entsprechenden Wegbetrag 374 bewirkt. Der Zusammenhang zwischen Druck und Verschiebung ist dabei durch die Federkonstante festgelegt.

Die zuvor beschriebenen Möglichkeiten, eine Vorrichtung nach der Erfindung zur gezielten Verstellung des Relativ-Stellwinkels mit einem Regelkreis zu betreiben, führten zu den elegantesten Lösungen. Eine weniger komfortable Lösung mit geringerem Aufwand ist möglich durch eine Steuerung des Verstellvorganges mit den hydraulischen Stellmotoren als Glieder einer offenen Steuerstrecke, wobei die Stellwirkung der Stellmotoren unmittelbar durch den als Stellgröße wirkenden hydraulischen Druck erzielt wird.

Die Größe des hydraulischen Druckes beinhaltet hierbei praktisch auch die Größe des Relativ-Stellwinkels $\beta$.

Bei der Vorrichtung gemäß der DE-PS 32 39 266 kann der Relativ-Stellwinkel ebenfalls durch eine Steuerung verstellt werden, wobei dank der dort vorhandenen Rückstellfeder (27) der als Stellgröße wirkende hydraulische Druck linear proportional zu dem Relativ-Stellwinkel sein muß. Diese notwendige Proportionalität läßt sich technisch einfach realisieren.

Bei einer Schwingungserreger-Vorrichtung, auf die sich die vorliegende Erfindung bezieht, liegen die Verhältnisse aber ganz anders: Eine erfolgreiche Realisierung einer offenen Steuerkette ist hier nur möglich durch Nutzung der neuartigen Erkenntnis, daß über den ganzen Verstellbereich 0° bis 180° des Relativ-Stellwinkels $\beta$ ein rückstellendes Reaktionsdrehmoment wirksam ist, dessen Größe u.a. eine Funktion des Relativ-Stellwinkels $\beta$ und der Winkelgeschwindigkeit w des Unwuchtkörpers ist. Mit Kenntnis der Wirkung der Größen $\beta$ und w läßt sich zielgerecht die physikalische Größe Druck der Stellgröße durch eine entsprechende Steuereinrichtung außerhalb des Vorrichtungsgestells einstellen und den Stellmotoren 244, 270, 272, 302 zuführen. Bei dieser Lösung ist bemerkenswert, daß sich die Veränderung des Relativ-Stellwinkels in beiden Richtungen durch die Veränderung nur ein und derselben Stellgröße Druck bewirken läßt.

In der Praxis werden häufig Schwingungserreger-Vorrichtungen benötigt, bei denen eine Vielzahl von Unwuchtkörper-Paaren in dem Vorrichtungsgestell unterzubringen und auch gemeinsam bezüglich des Relativ-Stellwinkels zu verstellen sind. Bedingt durch die mit der Erfindung ermöglichte Bauart der Stellantriebe mit einer Zuführung und Umsetzung der Stellenergie über ausschließlich rotierend bewegte Bauteile ist die Umsetzung eines Druck-Stellsignals in einen zugehörigen Relativ-Stellwinkel mit hoher Reproduziergenauigkeit möglich. Dieser Umstand, verbunden mit der erfindungsgemäß vorgesehenen Nutzung von aus Massenkräften resultierenden Rückstell-Drehmomenten (Reaktionsdrehmomente an den Unwuchtkörpern), welche eine hysteresefreie Umkehrung des Verstellvorganges bewirken, ist die Voraussetzung für eine präzise Parallelverstellung einer Vielzahl von Unwuchtkörper-Paaren mit mehreren Stellmotoren durch ein und dieselbe Stellgröße in der physikalischen Form eines hydraulischen Druckes.

Diese Ausführungsform der Erfindung bringt Vorteile sowohl in technischer Hinsicht durch die Vermeidung von Erregungsbeschleunigungen in einer nicht gewünschten Richtung als auch in ökonomischer Hinsicht, da für die Erzeugung der gemeinsam genutzten Stellgröße nur eine einzige Regeleinrichtung bzw. Steuereinrichtung vorgesehen werden muß.

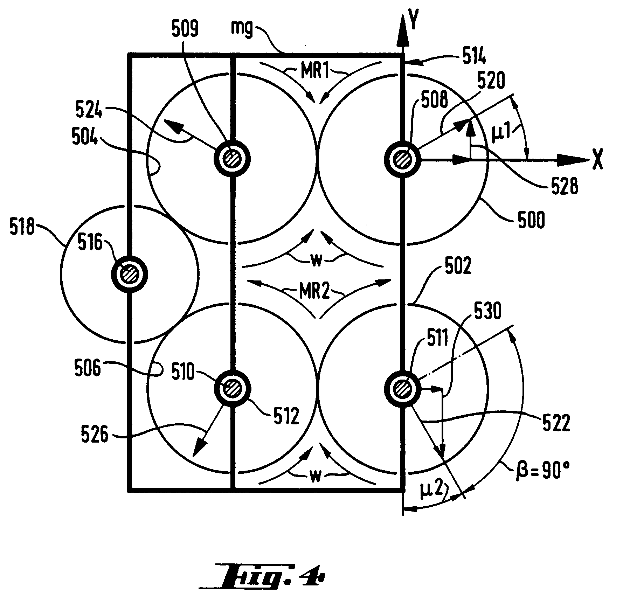

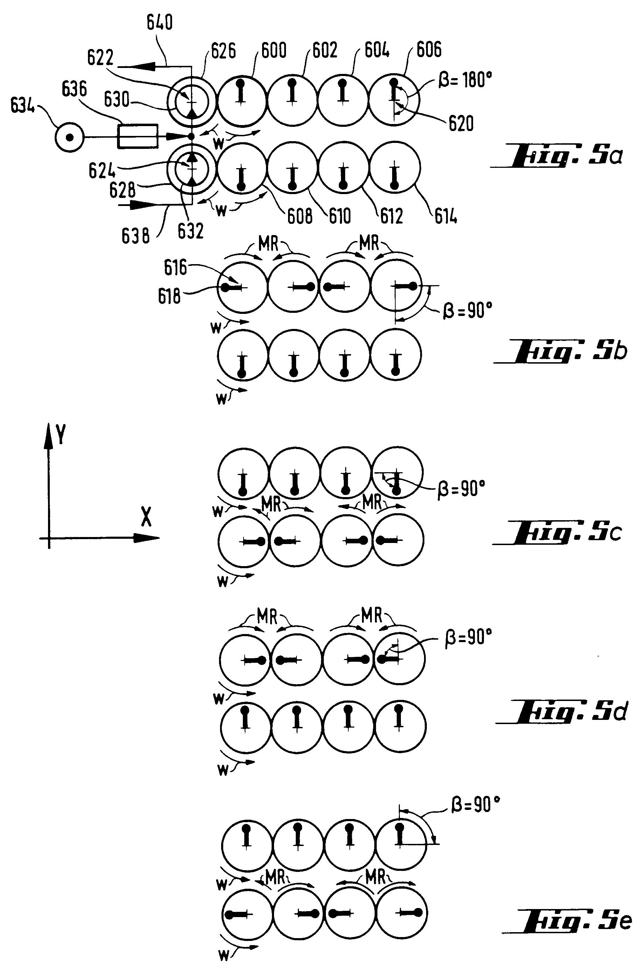

Bevor anhand der Figuren 6 und 7 weitere Beispiele von Vorrichtungen mit dem erfinderischen Merkmal zur Reduzierung von Reaktionsdrehmomenten MR erörtert werden, soll anschließend zunächst mit Hilfe der Figuren 4 und 5a bis 5e auf die Entstehung und Wirkungsweise von Reaktionsdrehmomenten eingegangen werden.

In Fig. 4 ist in schematischer Weise eine Vorrichtung zur Schwingungserregung mit zwei Paaren 500, 502 und 504, 506 von durch Kreise symbolisierten Unwuchtkörpern erster Art 500, 504 und zweiter Art 502, 506 dargestellt. Die Drehachsen 508 bis 511 sind in entsprechenden Lagerstellen 512 des mit der Masse mg behafteten Vorrichtungsgestells 514 gelagert. Die Kreise 500 bis 506 sollen gleichzeitig Zahnräder symbolisieren, mit welchen ein Synchronlauf der Teil-Unwuchtkörper erzwungen werden kann. Der Synchronlauf zwischen den Unwuchtkörpern erster Art 500, 504 und zweiter Art 502, 506 wird durch ein Zahnrad 518 gewährleistet, welches mit seiner Drehachse 516 ebenfalls im Vorrichtungsgestell gelagert ist.

Jeder Teil-Unwuchtkörper verfügt über ein Fliehmoment mit dem Absolut-Betrag $|M/2| = mu \times |e|$, wobei min die (punktförmig konzentrierte) Unwuchtmasse darstellt und $|e|$ den Abstand des Schwerpunktes der Unwuchtmasse von der Drehachse. Da e als Vektor aufgefaßt werden kann, ist auch das Fliehmoment M/2 als Vektor anzusehen, wie auch die bei Drehung eines Teil-Unwuchtkörpers mit der Winkelgeschwindigkeit w auftretende Fliehkraft $F = mu \times e \times w^2$. Da die Vektoren e, M/2 und F alle in die gleiche Richtung weisen, sind sie in Fig. 4 gemeinsam durch die Pfeile 520, 522, 524, 526 dargestellt.

Von der in Fig 4 gezeigten schematisierten Anordnung mit der zugehörigen Lage-Kombination der Fliehkraft-Vektoren wird angenommen, daß sie wie folgt zustande gekommen ist:
Bei entferntem Zahnrad 518 waren alle 4 Teil-Unwuchtkörper zunächst in einer Grundstellung derart ausgerichtet, daß alle Fliehmoment-Vektoren in die Richtung -Y zeigten. Anschließend erfolgte (durch einen nicht dargestellten Stellantrieb) eine gemeinsame, durch die Zahnräder 500 und 504 zwangs-synchronisierte Verdrehung der beiden (oberen) Unwuchtkörper erster Art 500, 504 in jeweils gegensätzlicher Richtung zu den Richtungspfeilen w um einen Relativ-Stellwinkel $\beta = 90°$. Hiernach wurde das Zahnrad 518 eingesetzt, womit erreicht wurde, daß alle vier Teil-Unwuchtkörper stets nur um einen gleichgroßen Winkel verdreht werden können (gleiche Teilkreis-Durchmesser an den Zahnrädern 500 bis 504 vorausgesetzt). Zuletzt wurden (mittels eines nicht dargestellten Arbeitsantriebs) alle vier Teil-Unwuchtkörper in eine synchronisierte Rotationsbewegung mit der Winkelgeschwindigkeit w versetzt, von welcher Rotationsbewegung Fig. 4 eine bestimmte, durch die Winkel $\mu$ gekennzeichnete Phase darstellt.

In jeder beliebigen Lage-Kombination der Fliehkraft-Vektoren ergibt sich durch Addition der Einzel-Vektoren eine sich stets verändernde resultierende Fliehkraft FRY in Richtung der + Y - Achse bzw. in Richtung der - Y-Achse. Die absolute Größe der resultierenden Fliehkraft FRY ist abhängig vom gewählten Relativ-Stellwinkel $\beta$ und hat den Wert 0 bei $\beta = 180°$, den Wert $4 \times mu \times |e| \times w^2$ bei $\beta = 0°$ und den Wert $4 \times mu \times |e| \times w^2 \times \sin 45°$ bei dem (dargestellten) Winkel $\beta = 90°$.

Entsprechende Betrachtungen ergeben ähnliche Ergebnisse für das resultierende Fliehmoment, dessen maximale absolute Größe sich bei $\beta = 0°$ zu $M = 2 \times mu \times |e|$ pro Paar bzw. zu $2 M = 4 \times mu \times |e|$ für beide Paare ergibt.

Die resultierende Fliehkraft FRY ist eine Wechselkraft, welche bei einer Unwucht-Umdrehung je einmal in + Y-Richtung und in -Y-Richtung ihren Maximalwert erreicht. Über die Lagerstellen der Drehachsen der Teil-Unwuchtkörper wird die resultierende Fliehkraft in das Vorrichtungsgestell eingeleitet und erzeugt an allen beteiligten Massen (repräsentiert durch die Masse mg) eine Beschleunigung a = FRY/mg, welche ebenso wie die resultierende Fliehkraft einmal während einer Unwucht-Umdrehung das Vorzeichen ändert. Die Beschleunigung a ist einmal die Ursache der Schwingbewegung der Masse mg in Y-Richtung und zum anderen die Ursache für die Erzeugung der Reaktionsdrehmomente MR.

Die Entstehung von Reaktionsdrehmomenten an den Unwuchtkörpern erster und zweiter Art kann man wie folgt anschaulich erklären:
Für den Fall, daß die Winkel $\mu 1$ und $y 2$ den Wert Null angenommen haben, ist die Masse mg (Vorrichtungsgestell) einer maximalen Beschleunigung $- a = 4 \times mu \times e \times w^2/mg$ unterworfen. Am Teil-Unwuchtkörper 500 kann man sich die Unwuchtmasse mu punktförmig konzentriert an der Spitze des Pfeiles 520 vorstellen, wobei die Länge des Pfeiles den Schwerpunktabstand e verkörpert. Die an der Drehachse 508 auf den Teil-Unwuchtkörper einwirkende Beschleunigung - a wird der Masse mu über den Hebelarm e mitgeteilt. Da eine Rückdrehung des Teil-Unwuchtkörpers 500 (entgegen der Richtung des Pfeiles w) ausgeschlossen sein soll, entsteht ein Drehmoment $MR1 = -4 \times mu^2 \times e^2 \times w^2 / mg$ bzw. $MR1 = -M^2 \times w^2 / mg$, welches in Richtung des Pfeiles MR1 wirkt. Wie man leicht erkennt, addieren sich die beiden Reaktionsdrehmomente MR1 der beiden Unwuchtkörper erster Art.

Für den Fall, daß die Winkel $\mu$ 1 und $\mu$ 2 den Wert 90° angenommen haben, ermittelt man analog für die Teil-Unwuchtkörper 502 und 506 gleiche Beträge für die Reaktionsdrehmomente MR2, die jedoch mit umgekehrten Vorzeichen versehen sind. Die entgegengesetzt wirkenden Reaktionsdrehmomente werden am Zahnrad 518 kompensiert. Wäre anstelle des Zahnrades 518 ein Verstellgetriebe angebracht (wie es bei einer verstellbaren Vorrichtung ja wirklich vorhanden ist), so müßte es einem Reaktionsdrehmoment von $2 \times MR2 = 2 \times M^2 \times w^2/mg$ standhalten. Die Pfeile 528 und 530 repräsentieren für Winkel $\mu$ 1 = $\mu$ 2 > 0° die Komponenten der Fliehkräfte in Y-Richtung. Da bei $\mu$ 1 = $\mu$ 2 = 45° die resultierende Fliehkraft FRY und damit auch die Beschleunigung der Masse mg den Wert Null annimmt, darf gefolgert werden, daß für die Werte $\mu$ 1 = $\mu$ 2 = 45° bzw. 45° + 180° die Reaktionsdrehmomente MR den Wert Null annehmen.

Zu beachten ist auch, daß für von dem Wert Null abweichende Werte für $\mu$ 1 bzw. $\mu$ 2 sich eine Verkürzung des Hebelarms e (Schwerpunktabstand) für die an der Unwuchtmasse min parallel zur Y-Achse angreifende Beschleunigung a einstellt, was ebenfalls zur Verringerung der absoluten Größe der Reaktionsdrehmomente MR beiträgt. Bemerkenswert ist weiterhin, daß das Reaktionsdrehmoment MR bei einem Relativ-Stellwinkel $\beta$ = 180° ständig den Wert Null aufweist, was sich aus dem Umstand erklärt, daß in dieser Situation die resultierende Beschleunigung ebenfalls den Wert Null annimmt.

Wie man leicht einsehen kann, ist die Entstehung, Wirkung und Größenordnung von Reaktionsdrehmomenten MR anschaulich und einfach erklärbar an Modellen, gleich oder ähnlich dem nach Fig. 4, insbesondere, wenn man den Spezialfall $\beta$ = 90° wählt und die Fliehkraft-Vektoren parallel zur Y-Achse bzw. X-Achse ausgerichtet darstellt. Mit dieser Darstellungsweise als Vergleichsbasis soll die Bildung und Wirkung von Reaktionsdrehmomenten MR von Vorrichtungen gemäß der Erfindung nachfolgend weiter untersucht werden.

Zunächst wird die Wirkungsweise von Reaktionsdrehmomenten MR anhand der Figuren 5a bis 5e weiter erläutert.

Es ist in Fig. 5 eine im Vergleich zu Fig. 4 noch weitergehend schematisierte Schwingungserregervorrichtung mit 8 Teil-Unwuchtkörpern dargestellt. Die Kreise 600 bis 614 stellen mit Zahnkränzen versehene Teil-Unwuchtkörper dar, die um in den Kreismittelpunkten durch Kreuze gekennzeichnete Drehachsen 620 drehbar sein sollen. Die über Hebel arme 616 mit den Drehachsen verbundenen kleinen Kreise 618 symbolisieren die Teil-Fliehmomente M/2 pro Teil-Unwuchtkörper, wobei die Hebelarme 616 auch als die Schwerpunkts-Abstandsvektoren e und die kleinen Kreise als die Unwuchtmassen min interpretiert werden können.

Man kann sich vorstellen, daß die Teil-Unwuchtkörper 600, 602, 608 und 610 den Teil-Unwuchtkörpern 504, 500, 506 und 502 der Vorrichtung nach Fig. 4 entsprechen, und daß die Summe der 8 Unwuchtkörper in Fig. 5 eine Verdoppelung der Anordnung der Unwuchtkörper in Fig. 4 darstellt.

Das in Fig. 4 gezeichnete Vorrichtungsgestell 514 mit der Masse mg einschließlich der Lagerstellen 512 für die Lagerung von Drehachsen hat man sich auch an Fig. 5 vorzustellen; auf die zeichnerische Darstellung wurde aus Gründen der Übersichtlichkeit verzichtet.

Die beiden Gruppen der Unwuchtkörper erster Art 600 bis 606 bzw. zweiter Art 608 bis 614 sind jeweils von Zahnrädern 626 bzw. 628, mit Drehachsen 622 bzw. 624 antreibbar, wobei die letztgenannten Drehachsen ebenfalls in Lagerstellen des (nicht dargestellten) Vorrichtungsgestells gelagert sein sollen.

Die Kreise 630 bzw. 632 stellen am Vorrichtungsgestell konzentrisch zu den Zahnrädern 626 bzw. 628 befestigte Hydraulikmotoren dar, die mit ihren Antriebswellen mit den Zahnrädern verbunden sind. Beide Hydraulikmotoren sind hintereinandergeschaltet und werden von einem hydraulischen Volumenstrom angetrieben, dessen Zuleitung 638 bzw. Ableitung 640 zu einem nicht dargestellten hydraulischen Steueraggregat führen, mit dem die Drehbewegung der Motoren gesteuert werden kann.

Die Betriebsweise der Hydraulikmotoren 630 und 632 entspricht derjenigen, wie sie weiter vorne bereits für Fig. 2b als "Betriebsversion 3" beschrieben wurde. Dieser Betriebsweise zufolge wird der Druck zwischen dem Ausgang des Motors 632 und dem Eingang des Motors 630 zusätzlich gesteuert, wobei mit der Größe dieses Druckes indirekt der gewünschte Relativ-Stellwinkel $\beta$ eingestellt wird. Da bei dieser Betriebsweise die Hydraulikmotoren 630 und 632 zugleich als Arbeits-Antriebsmotoren und als Stellmotoren arbeiten, ist es erforderlich, daß der Hydraulikmotor 632 auf seiner Ausgangsseite gleichzeitig als Hydraulikpumpe arbeitet, was in Fig. 5a durch entsprechende Symbole dargestellt ist. Die Steuerung des Druckes zwischen den Motoren geschieht durch Einspeisung eines separaten Fluidvolumenstroms, welcher der Druckquelle 634 entnommen und durch den Regler 636 geregelt wird.

In Fig. 5a laufen die übereinanderliegenden Zahnräder jeweils mit der gleichen Drehrichtung um, was durch die Pfeile w ausgedrückt ist, welche gleichzeitig auch die zugehörigen Winkelgeschwindigkeiten x symbolisieren. Man erkennt in Fig. 5a, daß ein Relativ-Stellwinkel ß = 180° eingestellt ist, was gleichbedeutend ist mit einem Wert Null für die Reaktionsdrehmomente MR für die resultierende Fliehkraft FRY. Beim Auftreten von Reaktionsdrehmomenten MR muß an den Zahnrädern 626 und 628 jeweils (durch die Hydraulikmotoren) ein Gegendrehmoment in der Größe von - 4 x MR aufgebracht werden.

In den Figuren 5b bis 5e ist jeweils die gleiche schematisierte Vorrichtung wie in Fig. 5a wiedergegeben, wobei zum Zwecke der besseren Übersichtlichkeit die Zahnräder 626 und 628 und die Hyraulikmotoren nicht mehr dargestellt wurden. Anders als in Fig. 5a sind jedoch die Fliehmomente 618 bzw. die Fliehkraft-Vektoren der einzelnen Teil-Unwuchtkörper der oberen Gruppe zu denen der unteren Gruppe um einen Relativ-Stellwinkel von β = 90° verstellt. Dabei unterscheiden sich die Konfigurationen der Figuren 5b bis 5e lediglich dadurch, daß von Figur zu Figur - beginnend mit Fig. 5b - sämtliche Teil-Unwuchtkörper beider Gruppen in einer in Richtung der Pfeile w um einen Drehwinkel von 90° synchron gedrehten Drehwinkelstellung dargestellt sind.
Der Übergang von der Darstellung der Unwuchtkörper in Fig. 5a zur Darstellung der Unwuchtkörper in Fig. 5b beinhaltet einen Verstellvorgang zur Einstellung eines Relativ-Stellwinkels β = 90° in einer Art, wie sie für die Betriebsweise von verstellbaren Schwingungserregervorrichtungen gemäß der Fig. 2b oder der Fig. 3 kennzeichnend ist. Dieser Verstellvorgang kommt dadurch zustande, daß die gesamte obere Gruppe unter Beibehaltung des Synchronlainfzwanges relativ zur unteren Gruppe verstellt wird, was in diesem Falle durch ein Vorlaufen des Hydraulikmotors 630 relativ zum Hydraulikmotor 632 um einen Winkel von 90° geschieht.

In den Figuren 5b bis 5e sind für den Relativ-Stellwinkel β = 90° jene vier Phasen dargestellt, welche bei einer Umdrehung einer Teil-Unwucht nacheinander durchlaufen werden und bei welchen die Reaktionsdrehmomente MR der einen Gruppe einen maximalen Wert und der anderen Gruppe den Wert Null annehmen.

Man erkennt, daß die Reaktionsdrehmomente MR
- sich innerhalb der Gruppe addieren,
- innerhalb der gleichen Gruppe stets in der gleichen Drehrichtung wirken und
- von Gruppe zu Gruppe gesehen, bei gleicher absoluter Größe in entgegengesetzten Drehrichtungen wirksam sind.

Die Erfindung erstreckt sich auch auf denjenigen Grenzfall, bei welchem der Relativ-Stellwinkel β theoretisch = Null (praktisch wegen der stets gegenwärtigen Toleranzen ungefähr = Null) eingestellt werden soll. Da in diesem Falle die Blindleistung extrem klein gehalten werden kann, ist ihre Übertragung auf hydraulischem Wege sehr ökonomisch und die hydraulischen Umlaufantriebs-Motoren können gleichzeitig als Stellantriebs-Motoren genutzt werden, wobei zur Aufrechterhaltung des Relativ-Stellwinkels β = Null vorteilhafterweise die eine Regeleinrichtung eingesetzt werden kann.

Eine derartige Grenzfall-Anwendung kann z.B. dann sinnvoll zum Einsatz gelangen, wenn der Wunsch besteht, sich möglicherweise unkontrolliert ergebende resultierende Fliehmomente konstant zu halten, für den Fall, daß man auf synchronisierende und Arbeitsleistung übertragende Zahnräder verzichten möchte. Dies ist durchaus von praktischer Bedeutung, da man auf diese Weise eine bedeutende Geräuschreduzierung erreichen könnte. Den Nachteil einer größeren notwendigen Anzahl von Umlaufantriebs-Motoren könnte man z.B. dadurch ausgleichen, daß man preiswertere Zahnradmotoren zum Einsatz brächte.

Da es sich bei diesem speziellen Fall praktisch um die Synchronisierung mehrerer einzelangetriebener Teil-Unwuchtkörper (nämlich solcher, die nicht ein eingangs definiertes Unwuchtkörper-Paar bilden) handelt, hat man eine ganz bestimmte Umlaufachse, die auch identisch mit einer Unwuchtkörper-Umlaufachsesein kann, als Bezugs-Umlaufachse aufzufassen, relativ zu welcher die Relativ-Stellwinkel aller übrigen Umlaufachsen einzustellen sind. Hierauf bezieht sich Patentanspruch 14.
Die Verstellung von Relativ-Stellwinkeln β von Teil-Unwuchtkörpern muß nicht zwangsläufig nur der Verstellung einer resultierenden Beschleunigung des Vorrichtungsgestells in immer der gleichen Wirrichtung relativ zum Vorrichtungsgestell dienen.

Gemäß der Lehre der Erfindung können Relativ-Stellwinkel auch derart gezielt verändert werden, daß damit eine resultierende Beschleunigung in veränderlichen, vorgebbaren Richtungen relativ zum Vorrichtungsgestell erzeugt wird, bzw. auch, daß veränderliche, vorgebbare Winkelbeschleunigungen am Vorrichtungsgestell wirksam werden.

Mit der Erzeugung derartiger Effekte können z.B. beim Einsatz von erfindungsgemäßen Vorrichtungen zur Schwingungserregung bei der Bodenverdichtung dem Vorrichtungsgestell gleichzeitig noch horizontale Vorschubbewegungen eingeprägt werden. Dies ist Gegenstand des Patentanspruchs 15.

**Patentansprüche**

1.  Vorrichtung zur Schwingungserregung eines Vorrichtungsgestells in einer vorgebbaren Richtung mit den Merkmalen:

    a) Die Vorrichtung weist in dem Gestell gelagerte und zum Umlauf um eine zugeordnete Achse antreibbare Teil-Unwuchtkörper zum Erzeugen von Teil-Fliehkraftvektoren auf, von denen jeweils ein erster und ein zweiter Teil-Unwuchtkörper ein Paar bilden, deren Teil-Fliehkraftvektoren relativ zueinander um einen Relativ-Stellwinkel $\beta$ zumindest zwischen einer ersten Position ($\beta = 180°$), in der der resultierende Fliehkraftvektor minimal ist, und einer zweiten Position ($\beta = 0°$), in der der resultierende Fliehkraftvektor maximal ist, verdrehbar sind,

    b) ein Stellantrieb ist vorgesehen für die Erzeugung einer Relativverdrehung zwischen den jeweils ein Paar bildenden Teil-Unwuchtkörpern auch während deren Umlaufs,

    c) alle Teil-Unwuchtkörper sind mit Antriebsmitteln für ihren Umlauf gekuppelt derart, daß sie abgesehen von der Verdrehung synchron umlaufen,

    d) der Stellantrieb umfaßt wenigstens zwei elektrische oder hydraulische Motoren mit je einem Stator und einem Rotor, welche Rotoren drehfest

    -   entweder mit den ersten und zweiten, jeweils ein Paar bildenden Teil-Unwuchtkörpern
    -   oder mit den ersten Teil-Unwuchtkörpern zweier Paare

    gekuppelt sind, von welchen Motoren wenigstens zwei in Reihe geschaltet sind, damit eine während des Umlaufs zur Aufrechterhaltung eines eingestellten Relativ-Stellwinkels $\beta$ benötigte Leistung von einem der Motoren zu dem anderen Motor über die Reihenverbindung übertragen wird.

2.  Vorrichtung zur Schwingungserregung eines Vorrichtungsgestells in einer vorgebbaren Richtung mit den Merkmalen:

    a) Die Vorrichtung weist in dem Gestell gelagerte und zum Umlauf um eine zugeordnete Achse antreibbare Teil-Unwuchtkörper zum Erzeugen von Teil-Fliehkraftvektoren auf, von denen jeweils ein erster und ein zweiter Teil-Unwuchtkörper ein Paar bilden, deren Teil-Fliehkraftvektoren relativ zueinander um einen Relativ-Stellwinkel $\beta$ zumindest zwischen einer ersten Position ($\beta = 180°$), in der der resultierende Fliehkraftvektor minimal ist, und einer zweiten Position ($\beta = 0°$), in der der resultierende Fliehkraftvektor maximal ist, verdrehbar sind,

    b) ein Stellantrieb ist vorgesehen für die Erzeugung einer Relativverdrehung zwischen den jeweils ein Paar bildenden Teil-Unwuchtkörpern auch während deren Umlaufs,

    c) alle Teil-Unwuchtkörper sind mit Antriebsmitteln für ihren Umlauf gekuppelt derart, daß sie abgesehen von der Verdrehung synchron umlaufen,

    d) der Stellantrieb umfaßt einen elektrischen oder hydraulischen Motor mit einem Stator und einem Rotor, welcher Rotor drehmomentübertragend

    -   entweder mit den ersten und zweiten, jeweils ein Paar bildenden Teil-Unwuchtkörpern
    -   oder mit den beiden ersten Teil-Unwuchtkörpern zweier Paare gekuppelt ist, welchem Motor von außen eine während des Umlaufs zur Aufrechterhaltung eines eingestellten Relativ-Stellwinkels $\beta$ benötigte Leistung zugeführt oder entnommen wird.

3.  Vorrichtung nach Anspruch 2, bei der die mit dem Stellantrieb gekuppelten Teil-Unwuchtkörper jeweils drehfest mit einem zugeordneten Ein-/-Ausgang eines Überlagerungsgetriebes gekuppelt sind und der Rotor drehfest mit einem Überlagerungseingang dieses Getriebes gekuppelt ist.

4.  Vorrichtung nach Anspruch 1, bei der die über den Stellantrieb übertragene Leistung zumindest den Leistungsbedarf deckt, der durch das Produkt aus Umlaufgeschwindigkeit und Reaktionsdrehmoment definiert ist.

5.  Vorrichtung nach Anspruch 1 oder 2 mit einem oder wenigstens zwei hydraulischen Stelltrieb-Motoren, bei der ein gewünschter Relativ-Stellwinkel $\beta$ durch Einstellen einer zugeordneten Druckdifferenz zwischen Motorein- und -ausgang festlegbar ist.

6.  Vorrichtung nach Anspruch, 1, bei der einer der Stellantrieb-Motoren auch als Pumpe arbeiten kann und dessen am Auslaß abgegriffene Pumpleistung über einen Leistungstransportweg mit dem Einlaß eines anderen Motors verbunden ist.

**7.** Vorrichtung nach einem der Ansprüche 4 bis 6, bei der zumindest einer der Stellantrieb-Motoren zugleich als Antriebsmittel für den Umlauf der Teil-Unwuchtkörper ausgebildet ist und der Leistungsanteil für die Aufrechterhaltung des Relativ-Stellwinkels $\beta$ als Druckerhöhung bzw. -absenkung dem durchströmenden hydraulischen Volumenstrom überlagert wird.

**8.** Vorrichtung nach Anspruch 6 oder 7, bei der der Relativ-Stellwinkel $\beta$ durch Verändern des Druckes in der Hydraulikleitung zwischen zwei Motoren einstellbar ist.

**9.** Vorrichtung nach Anspruch 8, bei der die für einen gegebenen Relativ-Stellwinkel $\beta$ erforderliche Druckänderung in Abhängigkeit von zumindest der Umlaufgeschwindigkeit variierbar ist.

**10.** Vorrichtung nach Anspruch 2 oder 3 mit einem hydraulischen Stellantrieb-Motor, dessen Stator und Rotor mitumlaufend angeordnet sind und dem Leistung von außen über eine Drehdurchführung zugeführt oder entnommen wird.

**11.** Vorrichtung nach Anspruch 1 oder 2, bei der der Relativ-Stellwinkel $\beta$ Steuer- bzw. Regelgröße einer Steuerstrecke bzw. eines Regelkreises ist.

**12.** Vorrichtung nach Anspruch 11 mit dem Relativ-Stellwinkel $\beta$ als Regelgröße, bei der der IST-Wert von $\beta$ in analoger Form mittels eines mitumlaufenden, mit dem ersten und dem zweiten Teil-Unwuchtkörper drehwinkelübertragend gekuppelten Meßgetriebes erfaßt wird.

**13.** Vorrichtung nach Anspruch 12, bei der das Meßgetriebe ein Schraubgetriebe ist, dessen Schraube mit dem ersten Teil-Unwuchtkörper, dessen Mutter mit dem zweiten Teil-Unwuchtkörper drehfest gekuppelt sind, so daß die axiale Relativlage von Schraube und Mutter ein Maß für den Relativ-Stellwinkel $\beta$ bildet.

**14.** Vorrichtung nach einem der Ansprüche 11, 12 oder 13, bei der der Relativ-Stellwinkel $\beta$ Regelgröße ist und bei der eine Mehrzahl von Paaren mit je einem ersten und einem zweiten Teil-Unwuchtkörper in einem gemeinsamen Gestell umlaufen, jeder Teil-Unwuchtkörper einen eigenen Umlaufantriebsmotor aufweist, der Relativ-Stellwinkel $\beta$ nur eines ausgewählten Paares geregelt ist und die Umlaufantriebsmotoren aller weiteren ersten Teil-Unwuchtkörper durch den ausgewählten ersten Umlaufantriebsmotor synchronisiert sind und alle weiteren zweiten Umlaufantriebsmotoren durch den ausgewählten zweiten Umlaufantriebsmotor synchronisiert sind.

**15.** Vorrichtung nach einem der vorangehenden Ansprüche mit mindestens zwei Paaren von Teil-Unwuchtkörpern für die Erzeugung gerichteter Gestell-Schwingungen, bei der mittels der Veränderung des Relativ-Stellwinkels die Richtung der Gestellschwingungen veränderbar ist.

**16.** Vorrichtung nach Anspruch 1 oder 2 mit winkelbegrenzenden Anschlägen zumindest für die Winkel $\beta = 0°$ und $\beta = 180°$.

**17.** Vorrichtung nach Anspruch 1 oder 2 mit Kupplungsmitteln zum starren Kuppeln der gegeneinander verdrehbaren Einstellmittel bei einem gewünschten Winkel $\beta$.

**18.** Vorrichtung nach Anspruch 17, bei der die Kupplungsmittel schaltbar sind.

**19.** Vorrichtung nach Anspruch 2, bei der auch der Stator des Motors drehmomentübertragend
- entweder mit den ersten und zweiten, jeweils ein Paar bildenden Teil-Unwuchtkörpern

  oder mit den beiden zweiten Teil-Unwuchtkörpern zweier Paare gekuppelt ist, und bei der Leistung zur Aufrechterhaltung eines eingestellten Relativ-Stellwinkels $\beta$ über eines der Elemente Stator oder Rotor zugeführt und über das andere Element entnommen wird.

**20.** Vorrichtung nach Anspruch 19 mit einem Hydraulikmotor, bei dem die Verstellung des Relativ-Stellwinkels $\beta$ durch Zu- oder Abfuhr von Hydraulikfluid in den bzw. aus dem Motor erfolgt.

**21.** Vorrichtung nach einem der vorangehenden Ansprüche, bei der die ersten und zweiten Teil-Unwuchtkörper eines Paares um eine gemeinsame Achse umlaufend angeordnet sind.

**Claims**

**1.** Apparatus for exciting vibrations of an apparatus frame in a predeterminable direction, comprising the features:

a) The apparatus comprises partial disbalance bodies journaled in said frame and drivable to rotate about a corresponding axis for generation of partial centrifugal force vectors, each a first and a second partial disbalance bodies forming a pair whose partial centrifugal force vectors are pivotable relative to one another about a relative adjustment angle $\beta$ at least between a first position ($\beta = 180°$) wherein the net centrifugal force vector is at a minimum and a second position ($\beta = 0°$) wherein the net centrifugal force vector is at a maximum,

b) an adjustment drive is provided for producing a relative pivoting between the partial disbalance bodies forming a pair even during their rotation,

c) all partial disbalance bodies are coupled to drive means such that, apart from their pivoting, they rotate in synchronism,

d) the adjustment drive comprises at least two electric or hydraulic motors each having a stator and a rotor, the rotors being drivingly coupled

- either to the first and second partial disbalance bodies which form a pair,
- or to the first partial disbalance bodies of two pairs,

    at least two of said motors being series-connected so that power required to maintain a selected relative adjustment angle $\beta$ during rotation from one of said motors to the other of said motors via the series connection.

2. **Apparatus for exciting vibrations of an apparatus frame in a predeterminable direction, comprising the features:**

    a) The apparatus comprises partial disbalance bodies journaled in said frame and drivable to rotate about a corresponding axis for generation of partial centrifugal force vectors, each a first and a second partial disbalance bodies forming a pair whose partial centrifugal force vectors are pivotable relative to one another about a relative adjustment angle $\beta$ at least between a first position ($\beta = 180°$) wherein the net centrifugal force vector is at a minimum and a second position ($\beta = 0°$) wherein the net centrifugal force vector is at a maximum,

    b) an adjustment drive is provided for producing a relative pivoting between the partial disbalance bodies forming a pair even during their rotation,

    c) all partial disbalance bodies are coupled to drive means such that, apart from their pivoting, they rotate in synchronism,

    d) the adjustment drive comprises an electric or hydraulic motor having a stator and a rotor, the rotor being torque-transmittingly coupled

    - either to the first and second partial disbalance bodies which form a pair,

- or to the first partial disbalance bodies of two pairs, power required to maintain a selected relative adjustment angle $\beta$ during rotation being supplied to said motor from the exterior.

3. Apparatus according to claim 2 wherein the partial disbalance body coupled to the adjustment drive is drivingly coupled to a corresponding in-/output of a differential gearing and the rotor is drivingly coupled to a superposition input of said gearing.

4. Apparatus according to claim 1 wherein the power transmitted via said adjustment drive covers at least the power need defined by the product of rotational speed times the reaction torque.

5. Apparatus according to claim 1 or claim 2 comprising one or at least two hydraulic adjustment drive motors wherein a desired relative adjustment angle $\beta$ is determinable by adjusting a corresponding pressure differential between motor input and motor output.

6. Apparatus according to claim 1 wherein one of said adjustment drive motors is able to operate as a pump, pumping power picked up at the outlet being connected to the input of another motor via a power transmission path.

7. Apparatus according to one of claims 4 to 6 wherein at least one of the adjustment drive motors is also arranged as a drive means for rotation of the partial disbalance bodies and wherein the power portion for maintaining the relative adjustment angle $\beta$ is superposed to the hydraulic volume throughflow as a pressure increase and pressure decrease, respectively.

8. Apparatus according to claim 6 or claim 7 wherein the relative adjustment angle $\beta$ is selectable by variation of the pressure in the hydraulic connection between two motors.

9. Apparatus according to claim 8 wherein the pressure variation required for a given relative adjustment angle $\beta$ is variable in response to at least the rotational speed.

10. Apparatus according to claim 2 or claim 3 comprising a hydraulic adjustment drive motor whose stator and rotor are disposed in a corotating manner, power being supplied to or drained from said motor via a rotary transmission.

11. Apparatus according to claim 1 or claim 2 wherein the relative adjustment angle $\beta$ is the controlled value of a control system or a servomechanism loop, respectively.

12. Apparatus according to claim 11 having the relative adjustment angle $\beta$ as a servo-controlled value wherein the ACTUAL value of $\beta$ is detected in analog form by means of a co-rotating measuring gear coupled to the first and second partial disbalance bodies in a torque-transmitting manner.

13. Apparatus according to claim 12 wherein said measuring gear is a worm gear whose screw is coupled to the first partial disbalance body and whose nut is coupled to the second partial disbalance body in a torque-transmitting manner so that the axial relative position of screw and nut is indicative of the relative adjustment angle $\beta$.

14. Apparatus according to one of the claims 11, 12, or 13 wherein the relative adjustment angle is a servo-controlled value and wherein a plurality of pairs each comprising a first and a second partial disbalance bodies rotate in a common frame, wherein each partial disbalance body has its own rotation drive motor, wherein the relative adjustment angle $\beta$ of only one selected pair is servo-controlled, and wherein the rotation drive motors of all further first partial disbalance bodies are synchronized by said selected first rotation drive motor and all further second rotation drive motors are synchronized by said selected second rotation drive motor.

15. Apparatus according to one of the preceding claims comprising at least two pairs of partial disbalance bodies for generation of directional frame vibrations wherein the direction of the frame vibrations is variable by means of variation of the relative adjustment angle .

16. Apparatus according to claim 1 or claim 2 having angle-limiting stops at least for the angles $\beta = 0°$ and $\beta = 180°$.

17. Apparatus according to claim 1 or claim 2 comprising clutch means for rigidly coupling the adjustment means which are pivotable relative to one another at a desired angle $\beta$.

18. Apparatus according to claim 17 wherein the clutch means are switchable.

19. Apparatus according to claim 2 wherein the stator, too, of the motor is coupled in a torque-transmitting manner
    - either to the first and second partial disbalance bodies forming a pair,
    - or to both of the second partial disbalance bodies of two pairs, and wherein power for maintaining a selected relative adjustment angle $\beta$ is supplied via one of the elements stator or rotor and drained via the other element.

20. Apparatus according to claim 19 comprising a hydraulic motor wherein the selection of the relative adjustment angle $\beta$ is effected by supply of hydraulic fluid to or draining it from the motor.

21. Apparatus according to one of the preceding claims wherein the first and the second partial disbalance bodies of a pair are disposed to rotate about a common axis.

**Revendications**

1. Dispositif pour produire des oscillations d'un bâti de machine selon une direction prédéterminée, caractérisé en ce que:

   a) il présente des balourds élémentaires pour engendrer des vecteurs élémentaires de force centrifuge, ces balourds étant montés à rotation dans le bâti et pouvant être entraînés en rotation autour d'axes qui leur sont associés et dont un premier balourd élémentaire et un second balourd élémentaire forment respectivement une paire dont les vecteurs élémentaires de force centrifuge peuvent être tournés l'un par rapport à l'autre d'un angle de réglage relatif $\beta$, au moins entre une première position ($\beta = 180°$) dans laquelle le vecteur de force centrifuge résultant est minimal, et une seconde position ($\beta = 0°$) dans laquelle le vecteur de force centrifuge résultant est maximal,

   b) il est prévu un dispositif d'entraînement de réglage pour engendrer une rotation relative entre les balourds élémentaires formant respectivement une paire, et ce même pendant leur rotation,

   c) tous les balourds élémentaires sont couplés pour leur rotation par des moyens d'entraînement de telle façon qu'ils tournent en synchronisme, abstraction faite de leur rotation relative,

   d) le dispositif d'entraînement de réglage comporte au moins deux moteurs électriques ou hydrauliques comprenant chacun un stator et un rotor, lesdits rotors étant

- soit solidaires en rotation des premiers et seconds balourds formant respectivement une paire
- soit solidaires en rotation des premiers balourds de deux paires, moteurs dont au moins deux sont couplés en série, pour que la puissance nécessaire pendant la rotation pour maintenir un angle de réglage $\beta$ fixé, puisse être transmise d'un moteur à l'autre par l'intermédiaire du couplage en série.

2. Dispositif pour produire des oscillations d'un bâti de machine selon une direction prédéterminée, caractérisé en ce que:

a) il présente des balourds élémentaires pour engendrer des vecteurs élémentaires de force centrifuge, ces balourds étant montés à rotation dans le bâti et pouvant être entraînés en rotation autour d'axes qui leur sont associés et dont un premier balourd élémentaire et un second balourd élémentaire forment respectivement une paire dont les vecteurs élémentaires de force centrifuge peuvent être tournés l'un par rapport à l'autre d'un angle de réglage relatif $\beta$, au moins entre une première position ($\beta = 180°$) dans laquelle le vecteur de force centrifuge résultant est minimal, et une seconde position ($\beta = 0°$) dans laquelle le vecteur de force centrifuge résultant est maximal,

b) il est prévu un dispositif d'entraînement de réglage pour engendrer une rotation relative entre les balourds élémentaires formant respectivement une paire, et ce même pendant leur rotation,

c) tous les balourds élémentaires sont couplés pour leur rotation par des moyens d'entraînement de telle façon qu'ils tournent en synchronisme, abstraction faite de leur rotation relative,

d) le dispositif d'entraînement de réglage comporte un moteur électrique ou hydraulique comprenant un stator et un rotor, ledit rotor étant

- soit couplé pour la transmission d'un couple avec les premier et seconds balourds élémentaires formant respectivement une paire
- soit couplé pour la transmission d'un couple avec les deux premiers balourds élémentaires de deux paires, moteur auquel on fournit à partir de l'extérieur, ou dont on prélève à partir de l'extérieur la puissance nécessaire pour, pendant la rotation, maintenir un angle de réglage $\beta$.

3. Dispositif selon la revendication 2, dans lequel les balourds élémentaires couplés au dispositif d'entraînement de réglage sont respectivement solidaires en rotation d'une entrée/sortie associée d'une transmission d'adjonction, le rotor étant solidaire en rotation d'une entrée d'adjonction de cette transmission.

4. Dispositif selon la revendication 1 dans lequel la puissance transmise par l'intermédiaire du dispositif d'entraînement de réglage couvre au moins le besoin en énergie défini par le produit de la vitesse de rotation par le couple réactif de rotation.

5. Dispositif selon la revendication 1 ou 2, comportant un ou au moins deux moteurs hydrauliques d'entraînement de réglage, et dans lequel un angle relatif $\beta$ de réglage souhaité peut être fixé en réglant une différence de pression correspondante entre l'entrée et la sortie du ou des moteurs.

6. Dispositif suivant la revendication 1, dans lequel l'un des moteurs du dispositif d'entraînement de réglage peut également fonctionner comme pompe dont la puissance de pompage prélevée côté refoulement, est transmise à l'entrée d'un autre moteur par l'intermédiaire d'un trajet de transmission de puissance.

7. Dispositif suivant l'un quelconque des revendications 4 à 6, dans lequel au moins l'un des moteurs d'entraînement de réglage est également conçu comme moyen d'entraînement assurant la rotation des balourds élémentaires, la part de puissance destinée à maintenir l'angle relatif de réglage $\beta$ étant ajoutée, respectivement sous forme d'augmentation ou de réduction de pression, à l'écoulement volumique hydraulique instantané.

8. Dispositif suivant la revendication 6 ou 7, dans lequel l'angle de réglage relatif $\beta$ est réglable par une modification de la pression dans la canalisation hydraulique entre deux moteurs.

9. Dispositif selon la revendication 8, dans lequel la variation de pression nécessaire pour obtenir un angle de réglage relatif $\beta$ déterminé peut être modifiée en fonction d'au moins la vitesse de rotation.

10. Dispositif selon la revendication 2 ou 3, comportant un moteur d'entraînement de réglage dont le stator et le rotor tournent de concert, la puissance y étant apportée ou en étant prélevée par l'intermédiaire d'un raccord tournant.

11. Dispositif selon la revendication 1 ou 2, dans lequel l'angle de réglage relatif β est une grandeur de commande ou une grandeur de réglage d'un trajet de commande ou d'un circuit de réglage.

12. Dispositif selon la revendication 11 dans lequel l'angle de réglage relatif β est une grandeur de réglage, et dans lequel la valeur instantanée de β est mesurée sous forme analogique au moyen d'une transmission de mesure rotative et couplée aux premier et second balourds élémentaires tout en transmettant l'angle.

13. Dispositif suivant la revendication 12, dans lequel la transmission de mesure est une transmission à vis, dont la vis est solidaire en rotation du premier balourd élémentaire et dont l'écrou est solidaire en rotation du second balourd élémentaire, de sorte que la position relative axiale de la vis et de l'écrou est une mesure de l'angle relatif de réglage β.

14. Dispositif suivant l'une quelconque des revendications 11, 12 ou 13, dans lequel l'angle de réglage relatif β est une grandeur de réglage et dans lequel une pluralité de paires comportant chacune des premier et second balourds élémentaires tournent dans un châssis commun, chaque balourd élémentaire comportant son propre moteur d'entraînement en rotation, l'angle de réglage relatif β de seulement l'une des paires étant réglé, tandis que les moteurs d'entraînement en rotation de tous les autres premiers balourds élémentaires sont synchronisés par le premier moteur d'entraînement en rotation choisi, tous les autres seconds moteurs d'entraînement en rotation étant synchronisés par le second moteur d'entraînement en rotation choisi.

15. Dispositif suivant l'une quelconque des revendications précédentes, comportant au moins deux paires de balourds élémentaires pour la production d'oscillations dirigées d'un bâti, dans lequel la direction des oscillations du bâti sont réglables en faisant varier l'angle de réglage relatif.

16. Dispositif suivant la revendication 1 ou 2, comportant des butées de limitation des angles au moins pour les angles β = 0° et β = 180°.

17. Dispositif suivant la revendication 1 ou 2, comportant des moyens de couplage pour, en présence d'un angle β déterminé, assurer un couplage rigide des moyens de réglage rotatifs les uns par rapport aux autres.

18. Dispositif suivant la revendication 17, dans lequel les moyens de couplage peuvent être commutés.

19. Dispositif suivant la revendication 2, dans lequel le stator du moteur est également couplé avec transmission d'un couple
    - soit avec les premier et second balourds élémentaires formant respectivement une paire
    - soit avec les deux balourds élémentaires de deux paires, la puissance pour maintenir un angle relatif de réglage β réglé étant ajoutée par l'intermédiaire de l'un des éléments parmi le rotor et le stator, et prélevé par l'intermédiaire de l'autre élément.

20. Dispositif suivant la revendication 19 comportant un moteur hydraulique, dans lequel la variation l'angle relatif de réglage β est réalisée en envoyant du fluide hydraulique dans le moteur ou en en prélevant.

21. Dispositif selon l'une quelconque des revendications précédentes, dans lequel les premier et second balourds élémentaires d'une paire sont montés rotatifs autour d'un axe commun.

Fig. 1

Fig. 2a

Fig. 2b

_Fig. 3_

Fig. 4

_Fig. 5a_

_Fig. 5b_

_Fig. 5c_

_Fig. 5d_

_Fig. 5e_